# DEMANDE DE BREVET EUROPEEN

(11) **EP 1 273 860 A2**
(43) Date de publication de la demande: **08.01.2003**
(21) Numéro de dépôt: 02291595.3
(22) Date de dépôt: 26.06.2002
(51) Int. Cl.: F25J 3/02, F25J 3/06, F25J 3/08

(54) **Procédé de liquéfaction et de déazotation de gaz naturel, installation de mise en oeuvre**

(30) Priorité: 04.07.2001 FR 0108883
(71) Demandeur: TECHNIP-COFLEXIP, 92400 Courbevoie (FR)
(72) Inventeur: Paradowski, Henri, 95000 Cergy (FR)
(74) Mandataire: Berger, Helmut

(57) **Abrégé**

Procédé de liquéfaction et de déazotation de gaz naturel, installation de mise en oeuvre, et gaz obtenus par cette séparation. L'invention concerne un procédé de liquéfaction et de déazotation de gaz naturel (1) contenant de l'azote, dans lequel ledit gaz naturel (1) est refroidi, liquéfié et séparé en une première fraction de tête (9) relativement plus volatile enrichie en azote, et en une première fraction de pied (15).

Le procédé est caractérisé en ce que la première fraction de tête (9) est refroidie et liquéfiée, séparée en une deuxième fraction de tête (11) relativement plus volatile qui fournit de l'azote gazeux (29), et en une deuxième fraction de pied (12) qui est retraitée, et en ce que la première fraction de pied (15) est refroidie pour fournir du gaz naturel liquéfié essentiellement exempt d'azote (24). D'autres modes de réalisation sont décrits.

## Description

La présente invention concerne, de façon générale l'industrie gazière, et en particulier un procédé de liquéfaction et de déazotation d'un gaz naturel sous pression.

Plus précisément, l'invention concerne, selon un de ses premiers aspects, un procédé de liquéfaction et de déazotation d'un gaz naturel sous pression contenant du méthane, des hydrocarbures en C₂ et supérieurs et de l'azote, pour l'obtention, d'une part d'un gaz naturel liquéfié essentiellement exempt d'azote, et d'autre part d'azote gazeux essentiellement exempt d'hydrocarbures, comprenant une première étape (I) dans laquelle (Ia) on refroidit, on détend, et on liquéfie ledit gaz naturel pour fournir un flux de gaz naturel liquéfié détendu, dans laquelle (Ib) on sépare ledit gaz naturel liquéfié détendu dans une première colonne de fractionnement comportant une pluralité d'étages, en une première fraction de tête relativement plus volatile enrichie en azote, collectée sur un dernier étage de ladite première colonne de fractionnement, et une première fraction de pied relativement moins volatile appauvrie en azote.

Des procédés de liquéfaction et de déazotation de ce type sont bien connus de l'homme de l'art et utilisés depuis de nombreuses années. Les étapes (Ia) et (Ib) sont, de façon connue, réalisées dans des installations distinctes utilisant des moyens propres.

Le procédé de liquéfaction de gaz naturel conforme au préambule ci-dessus est utilisé de façon connue dans le but d'éliminer l'azote parfois présent en grande quantité dans le gaz naturel. Cette solution présente l'avantage d'être économique sur le plan de la consommation d'énergie nécessaire à la déazotation et à la liquéfaction du gaz naturel.

Dans ce cas, l'azote produit contient de grandes quantités d'hydrocarbures (jusqu'à 50-60%) et ne peut donc pas être rejeté directement dans l'atmosphère. Cet azote riche en hydrocarbures, ou gaz combustible, peut être utilisé pour alimenter des turbines à gaz. Ce gaz combustible peut aussi être brûlé en torchère.

Dans tous les cas, le brûlage de gaz contenant de fortes proportions d'azote produit de grandes quantités d'oxydes d'azote qui sont des polluants atmosphériques importants. Parmi les oxydes d'azote, certains sont des gaz irritants et/ou toxiques favorisant l'apparition de maladies respiratoires telles que l'asthme. Cela pose un problème de santé publique qui ne permet pas d'envisager raisonnablement l'implantation d'unités de déazotation de technologie connue dans des zones urbaines.

De plus, lors du fonctionnement d'une torchère, des flammes dépassant parfois une dizaine de mètres de haut sont produites, présentant ainsi des risques de sécurité non négligeables.

Enfin, le brûlage de gaz de combustion produit aussi de grandes quantités de dioxyde de carbone qui est responsable d'un effet de serre important, notamment en raison de sa forte absorption de la lumière dans le domaine de l'infrarouge.

L'utilisation de moyens pour réduire les oxydes d'azote en azote ou encore pour absorber le dioxyde de carbone contenu dans les fumées est connue. Cependant, ces techniques sont très onéreuses et rendraient la production de GNL non rentable.

Dans ce contexte, un premier but de l'invention est de proposer un procédé qui permette d'éliminer la pollution due à la production d'oxydes d'azote, et de limiter la production de dioxyde de carbone.

A cette fin, le procédé de l'invention, par ailleurs conforme à la définition générique qu'en donne le préambule ci-dessus, est essentiellement caractérisé en ce qu'il comprend une seconde étape (II) dans laquelle (IIa) la première fraction de tête est refroidie et liquéfiée pour fournir une première fraction refroidie et liquéfiée, en ce que, dans cette seconde étape, (IIb) la première fraction refroidie et liquéfiée est séparée en une deuxième fraction de tête relativement plus volatile très enrichie en azote, et en une deuxième fraction de pied relativement moins volatile, relativement moins riche en azote, en ce que, dans cette seconde étape (IIc) la deuxième fraction de pied est introduite au dernier étage de ladite première colonne de fractionnement, en ce que, dans cette seconde étape (IId) la deuxième fraction de tête est réchauffée pour fournir l'azote gazeux, et en ce que, dans cette seconde étape (IIe) la première fraction de pied est refroidie pour fournir le gaz naturel liquéfié essentiellement exempt d'azote, la puissance thermique permettant à l'étape (IIa) de refroidir et de liquéfier la première fraction de tête étant fournie par un troisième cycle de réfrigération.

Ainsi, les rejets sont principalement constitués d'azote et sont essentiellement exempts d'hydrocarbures.

Un des mérites de l'invention est d'avoir découvert une solution économique par rapport aux moyens connus de réduction d'oxydes d'azote et d'élimination du dioxyde de carbone, produits par la combustion de gaz riches en azote contenant des hydrocarbures. L'invention montre qu'il est possible (a) de séparer efficacement l'azote du gaz naturel et (b) de produire d'une part de l'azote essentiellement exempt d'hydrocarbures qui peut éventuellement être rejeté sans traitement dans l'atmosphère, et d'autre part du gaz naturel liquéfié en une seule opération. L'invention permet donc d'éviter le brûlage en général, et la mise en torchère des gaz riches en azote provenant de la déazotation de gaz naturel en particulier, tout en limitant les rejets de polluants atmosphériques.

Un autre des mérites de l'invention est de combiner les étapes de liquéfaction du gaz naturel et de déazotation de ce dernier dans une seule installation. Cette combinaison présente l'avantage surprenant de réduire les coûts de production du gaz naturel liquéfié, tout en permettant de limiter l'impact environnemental des rejets gazeux. De plus, le procédé de l'invention met en oeuvre un nombre d'étapes limitées, permettant de ce fait une fabrication simplifiée en raison du nombre limité d'éléments à assembler.

Ces résultats sont atteints par la mise en oeuvre d'un cycle de réfrigération apportant le froid nécessaire au refroidissement et à la liquéfaction de la première fraction de tête. Il n'est ainsi pas nécessaire de prélever ce froid dans la première fraction de pied, ce qui aurait pour effet de la réchauffer et irait à l'encontre d'un des objectifs de l'invention, qui est de produire du gaz liquide déazoté.

Le procédé de l'invention peut comprendre en outre une troisième étape (III) dans laquelle (IIIa) la première fraction de pied, avant d'être refroidie pour l'obtention du gaz naturel liquéfié essentiellement exempt d'azote, est refroidie, détendue et introduite dans un premier étage relativement moins froid d'une deuxième colonne de fractionnement, et en ce que, dans cette troisième étape (IIIb) la deuxième fraction de tête, avant d'être réchauffée pour fournir de l'azote gazeux, est refroidie, détendue, liquéfiée et introduite dans un deuxième étage relativement plus froid de ladite deuxième colonne de fractionnement.

L'ajout de cette troisième étape permet de diminuer la puissance en compression nécessaire pour le refroidissement de fluides circulant dans une installation conforme au procédé.

Avantageusement, le troisième cycle de réfrigération utilise un fluide réfrigérant, ledit fluide réfrigérant étant refroidi et/ou au moins partiellement condensé par un deuxième cycle de réfrigération.

De préférence, le deuxième cycle de réfrigération utilise un fluide réfrigérant, ledit fluide réfrigérant du deuxième cycle de réfrigération étant refroidi et/ou au moins partiellement condensé par un premier cycle de réfrigération utilisant un autre fluide réfrigérant.

Avantageusement, le fluide réfrigérant du premier cycle de réfrigération est soit un hydrocarbure en C3 pur, soit un mélange contenant des hydrocarbures en C2 et C3.

De préférence, le fluide réfrigérant du deuxième cycle de réfrigération est un mélange comprenant majoritairement des hydrocarbures en C2 et C1.

Par exemple, le fluide réfrigérant du deuxième cycle de réfrigération est un mélange comprenant majoritairement un hydrocarbure en C2.

Avantageusement, le fluide réfrigérant du troisième cycle de réfrigération est un mélange comprenant majoritairement des hydrocarbures en C1 et de l'azote.

De préférence, le fluide réfrigérant du troisième cycle de réfrigération est un mélange comprenant majoritairement un hydrocarbure en C1.

Selon un mode de réalisation préféré de l'invention, une pluralité de compresseurs sont utilisés pour comprimer le ou les fluides réfrigérants, et, de manière plus préférée, lesdits compresseurs fonctionnent à l'aide de moteurs électriques.

L'électricité peut être produite par des centrales hydrauliques, solaires, ou nucléaires qui ne produisent pas de gaz à effet de serre.

Selon un deuxième de ses aspects, l'invention concerne un gaz naturel liquéfié essentiellement exempt d'azote, et de l'azote gazeux essentiellement exempt d'hydrocarbures obtenu par un procédé selon l'invention.

Le gaz naturel liquéfié (GNL) obtenu par le procédé de l'invention comprendra habituellement et de préférence moins de 1 % mol d'azote, et l'azote gazeux obtenu par le procédé de l'invention comprendra habituellement et de préférence moins de 1 % mol d'hydrocarbures.

Selon un troisième de ses aspects, l'invention concerne une installation de liquéfaction et de déazotation d'un gaz naturel sous pression contenant du méthane, des hydrocarbures en C₂ et supérieurs et de l'azote, pour l'obtention, d'une part d'un gaz naturel liquéfié essentiellement exempt d'azote, et d'autre part d'azote gazeux essentiellement exempt d'hydrocarbures, comprenant des moyens pour effectuer une première étape (I) dans laquelle (Ia) on refroidit, on détend, et on liquéfie ledit gaz naturel pour fournir un flux de gaz naturel liquéfié détendu, dans laquelle (Ib) on sépare ledit gaz naturel liquéfié détendu dans une première colonne de fractionnement comportant une pluralité d'étages, en une première fraction de tête relativement plus volatile enrichie en azote, collectée sur un dernier étage de ladite première colonne de fractionnement, et une première fraction de pied relativement moins volatile appauvrie en azote, caractérisée en ce qu'elle comprend des moyens pour effectuer une seconde étape (II) dans laquelle (IIa) la première fraction de tête est refroidie et liquéfiée pour fournir une première fraction refroidie et liquéfiée, en ce que, dans cette seconde étape (IIb) la première fraction refroidie et liquéfiée est séparée en une deuxième fraction de tête relativement plus volatile très enrichie en azote, et en une deuxième fraction de pied relativement moins volatile, relativement moins riche en azote, en ce que, dans cette seconde étape (IIc) la deuxième fraction de pied est introduite au dernier étage de ladite première colonne de fractionnement, en ce que, dans cette seconde étape (IId) la deuxième fraction de tête est réchauffée pour fournir l'azote gazeux, et en ce que, dans cette seconde étape (IIe) la première fraction de pied est refroidie pour fournir le gaz naturel liquéfié essentiellement exempt d'azote, la puissance thermique permettant à l'étape (IIa) de refroidir et de liquéfier la première fraction de tête étant fournie par un troisième cycle de réfrigération.

Cette installation présente l'intérêt d'utiliser un nombre limité d'éléments pour la mise en oeuvre du procédé de l'invention.

L'installation de l'invention peut en outre comprendre des moyens pour effectuer une troisième étape (III) dans laquelle (IIIa) la première fraction de pied, avant d'être refroidie pour l'obtention du gaz naturel liquéfié essentiellement exempt d'azote, est refroidie, détendue et introduite dans un premier étage relativement moins froid d'une deuxième colonne de fractionnement, et en ce que, dans cette troisième étape (IIIb) la deuxième fraction de tête, avant d'être réchauffée pour fournir de l'azote gazeux, est refroidie, détendue, liquéfiée et introduite dans un deuxième étage relativement plus froid de ladite deuxième colonne de fractionnement.

Avantageusement, le troisième cycle de réfrigération utilise un fluide réfrigérant, ledit fluide réfrigérant étant refroidi et/ou au moins partiellement condensé par un deuxième cycle de réfrigération.

De préférence, le deuxième cycle de réfrigération utilise un fluide réfrigérant, ledit fluide réfrigérant du deuxième cycle de réfrigération étant refroidi et/ou au moins partiellement condensé par un premier cycle de réfrigération utilisant un autre fluide réfrigérant.

Avantageusement, le fluide réfrigérant du premier cycle de réfrigération est soit un hydrocarbure en C3 pur, soit un mélange contenant des hydrocarbures en C2 et C3.

De préférence, le fluide réfrigérant du deuxième cycle de réfrigération est un mélange comprenant majoritairement des hydrocarbures en C2 et C1.

Par exemple, le fluide réfrigérant du deuxième cycle de réfrigération est un mélange comprenant majoritairement un hydrocarbure en C2.

Avantageusement, le fluide réfrigérant du troisième cycle de réfrigération est un mélange comprenant majoritairement des hydrocarbures en C1 et de l'azote.

De préférence, le fluide réfrigérant du troisième cycle de réfrigération est un mélange comprenant majoritairement un hydrocarbure en C1.

L'invention sera mieux comprise et d'autres buts, caractéristiques, détails et avantages de celle-ci apparaîtront plus clairement au cours de la description qui va suivre en se référant aux dessins schématiques annexés, donnés uniquement à titre d'exemple non limitatif et dans lesquels :
La figure 1 représente un schéma synoptique fonctionnel d'une installation conforme à un mode de réalisation possible de l'invention ; et
La figure 2 représente un schéma synoptique fonctionnel d'une installation conforme à un autre mode de réalisation préféré de l'invention.

Sur ces deux figures, on peut notamment lire les symboles « FC » qui signifie « contrôleur de débit », « M » qui signifie « moteur électrique », « LC » qui signifie « contrôleur de niveau de liquide », « PC » qui signifie « contrôleur de pression », « G » qui signifie « générateur électrique » et « TC » qui signifie « contrôleur de température ».

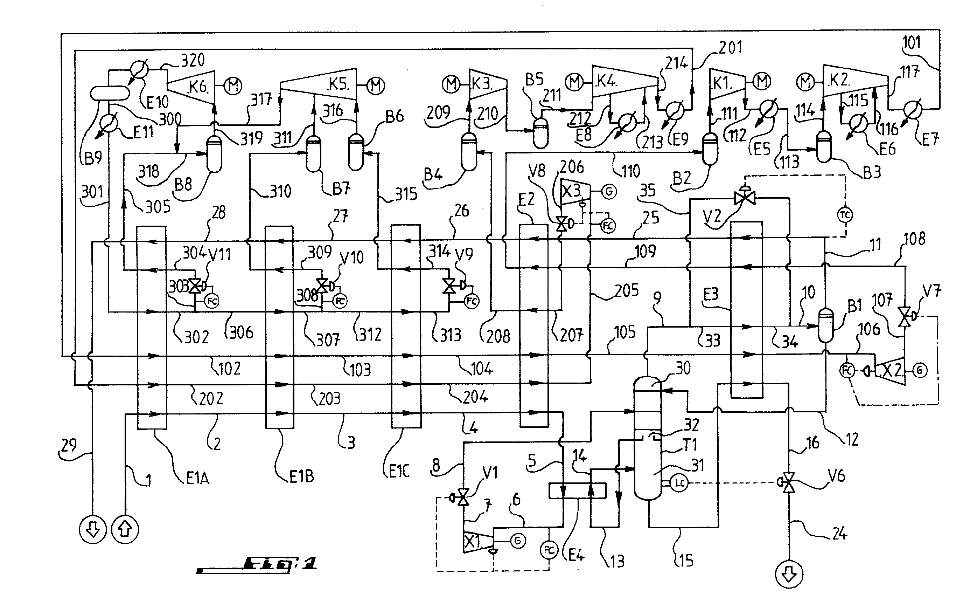

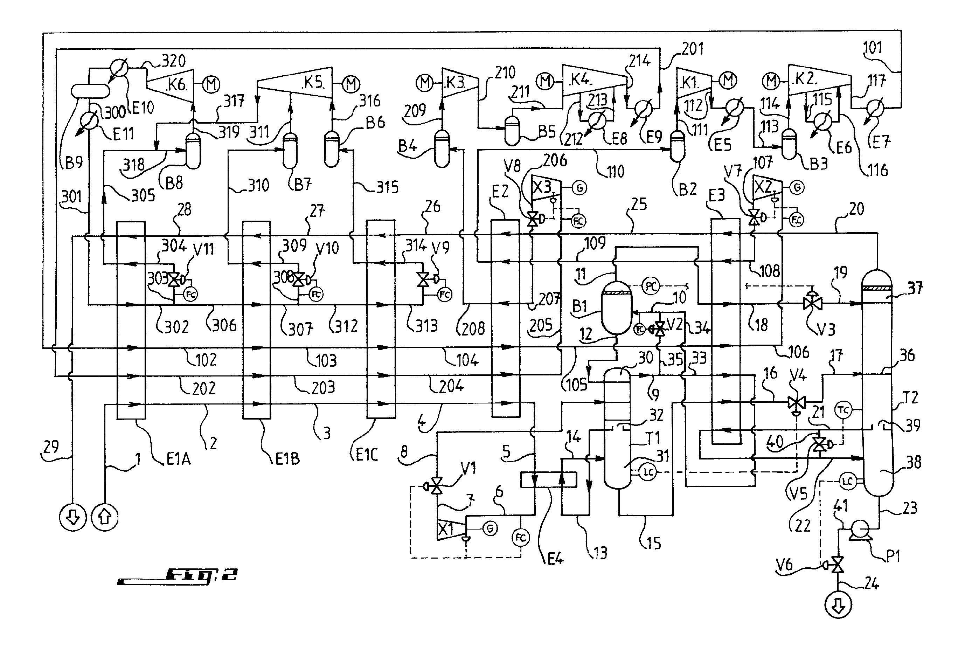

Par souci de clarté et de concision, les conduites utilisées dans les installations des figures 1 et 2 seront reprises par les mêmes signes de référence que les fractions gazeuses et liquides qui y circulent.

En se rapportant à la figure 1, l'installation représentée est destinée à liquéfier et déazoter un gaz naturel 1 sous pression contenant du méthane, des hydrocarbures en C₂ et supérieurs et de l'azote, pour l'obtention, d'une part d'un gaz naturel liquéfié (GNL) essentiellement exempt d'azote 24, et d'autre part d'azote gazeux 29 essentiellement exempt d'hydrocarbures.

L'installation représentée comporte quatre circuits indépendants.

Un premier circuit correspond au traitement d'un gaz naturel 1 pour l'obtention d'une part de gaz naturel liquéfié 24, et d'autre part d'azote gazeux 29. Les trois autres circuits correspondent à des cycles réfrigérants utilisant des compresseurs K1-K6, nécessaires à la liquéfaction du gaz naturel 1.

Dans le premier circuit, le gaz naturel 1 est refroidi, détendu, et liquéfié pour fournir un flux de GNL détendu 8. Le flux de GNL détendu 8 est obtenu par refroidissement successif dans des échangeurs thermiques E1A, E1B, E1C, E2, puis E4. Du gaz naturel liquéfié 6 obtenu en sortie de l'échangeur E4 est détendu dans une turbine X1 couplée à un générateur électrique, pour fournir un flux 7 qui est ensuite détendu dans une vanne V1. L'ouverture de la vanne V1 est régulée par un contrôleur de débit sur la conduite 6. L'admission du flux 6 dans la turbine X1 est également régulée par ce même contrôleur de débit.

La vanne V1 produit en sortie le flux de GNL détendu 8.

Le flux de gaz naturel liquéfié détendu 8 est ensuite séparé en deux fractions dans une première colonne de fractionnement T1 qui comporte une pluralité d'étages. Cette dernière produit, sur un dernier étage 30, une première fraction de tête 9 relativement plus volatile enrichie en azote. Elle produit aussi une première fraction de pied 15 relativement moins volatile appauvrie en azote.

La première colonne de fractionnement T1 comporte un rebouilleur de fond de colonne 31 comprenant un plateau 32. Un flux 13 collecté sur le plateau 32 est réchauffé dans l'échangeur thermique E4 pour fournir un flux 14 qui est réintroduit dans la première colonne de fractionnement T1 en dessous du plateau 32.

La première fraction de tête 9 est séparée en des première et deuxième fractions de séparation 33 et 35. La première fraction de séparation 33 est refroidie et liquéfiée dans l'échangeur E3 pour fournir une première fraction de séparation refroidie 34. La deuxième fraction de séparation 35 circule dans une conduite 35 comportant une vanne V2, puis est mélangée à la première fraction de séparation refroidie 34 pour fournir un flux 10. L'ouverture de la vanne V2 est commandée par un contrôleur de température positionné sur la conduite 11. Le flux 10 est introduit dans un ballon B1 pour y être séparé en une deuxième fraction de tête 11 relativement plus volatile très enrichie en azote et en une deuxième fraction de pied 12 relativement moins volatile, relativement moins riche en azote.

La deuxième fraction de pied 12 est introduite au dernier étage 30 de ladite première colonne de fractionnement T1.

La deuxième fraction de tête 11 est réchauffée successivement dans les échangeurs E3, E2, E1C, E1B, et E1A pour fournir l'azote gazeux 29.

La première fraction de pied 15 est refroidie dans l'échangeur thermique E3 pour fournir le gaz naturel liquéfié essentiellement exempt d'azote 24. Le rebouilleur du fond de la première colonne de fractionnement T1 comporte un contrôleur de niveau de liquide couplé à une vanne V6 montée sur la conduite d'évacuation du GNL essentiellement exempt d'azote 24.

L'installation représentée sur la figure 1 comporte un deuxième circuit qui correspond à un premier cycle de réfrigération. Ce premier cycle de réfrigération permet de refroidir les échangeur thermiques E1A, E1B et E1C et comporte trois étages de pression de vaporisation.

Un premier réfrigérant 300 provenant d'un ballon de stockage B9 est refroidi par passage dans un réfrigérant E11 pour fournir un premier flux refroidi 301.

Ce premier réfrigérant est soit un hydrocarbure en C3 pur, soit un mélange contenant des hydrocarbures en C2 et C3.

Dans un mode de réalisation préféré, le fluide réfrigérant comprend entre 0% et 60% d'éthane en moles, et entre 40% et 60% de propane en moles.

Ce premier flux refroidi 301 est refroidi dans l'échangeur thermique E1A pour fournir un second flux refroidi 302. Ce dernier est séparé en :
- un troisième flux 303, qui est détendu et refroidi dans une vanne V11, dont l'ouverture est contrôlée par un contrôleur de débit sur la conduite 303, pour fournir un quatrième flux refroidi 304. Le quatrième flux refroidi 304 est réchauffé et vaporisé dans l'échangeur E1A pour fournir un cinquième flux 305,
- et en un sixième flux 306 qui est refroidi dans l'échangeur E1B pour fournir un septième flux 307. Le septième flux 307 est séparé en :

- un huitième flux 308, qui est détendu et refroidi dans une vanne V10, dont l'ouverture est contrôlée par un contrôleur de débit sur la conduite 308, pour fournir un neuvième flux refroidi 309. Le neuvième flux refroidi 309 est réchauffé et vaporisé dans l'échangeur E1B pour fournir un dixième flux 310,
- et en un douzième flux 312 qui est refroidi dans l'échangeur E1C pour fournir un treizième flux 313.

Le treizième flux 313 est détendu et refroidi dans une vanne V9, dont l'ouverture est contrôlée par un contrôleur de débit sur la conduite 313, pour fournir un quatorzième flux refroidi 314. Le quatorzième flux refroidi 314 est réchauffé et vaporisé dans l'échangeur E1C pour fournir un quinzième flux 315.

Le quinzième flux 315 circule dans un ballon d'aspiration B6 qui produit un seizième flux 316. Ce dernier alimente un compresseur K5 à un étage à basse pression.

Le dixième flux 310 circule dans un ballon d'aspiration B7 qui produit un onzième flux 311. Ce dernier alimente le compresseur K5 à un étage à moyenne pression.

Le compresseur K5 est entraîné par un moteur, de préférence électrique, et fournit un dix-septième flux 317 comprimé.

Le dix-septième flux 317 est mélangé au cinquième flux 305 pour fournir un dix-huitième flux 318. Le dix-huitième flux 318 circule dans un ballon d'aspiration B8 qui produit un dix-neuvième flux 319. Ce dernier alimente un compresseur K6 à un étage à basse pression.

Le compresseur K6 est entraîné par un moteur, de préférence électrique, et fournit un vingtième flux 320 comprimé.

Le vingtième flux 320 est refroidi dans un réfrigérant E10 puis est stocké dans le ballon B9.

L'installation représentée sur la figure 1 comporte de plus un troisième circuit qui correspond à un deuxième cycle de réfrigération. Ce deuxième cycle de réfrigération permet de refroidir l'échangeur thermique E2, et comporte un étage de pression de vaporisation.

Un deuxième mélange réfrigérant 201 provenant d'un réfrigérant E9 est refroidi et totalement condensé par passage successif dans les échangeurs thermiques E1A, E1B, E1C, et E2 pour fournir un premier flux refroidi et condensé 205.

Ce deuxième mélange réfrigérant comprend majoritairement des hydrocarbures en C2 et en C1. De préférence, ce mélange comprend majoritairement un hydrocarbure en C2. Dans un mode de réalisation préféré, le mélange comprend, en moles, entre 20% et 50% de méthane, entre 50% et 80% d'éthane et entre 0 et 20% de propane.

Ce premier flux refroidi et condensé 205 est détendu dans une turbine de détente X3 couplée à un générateur électrique. La vitesse de rotation de la turbine de détente X3 est régulée par un contrôleur de débit positionné sur la conduite 205. La turbine de détente X3 fournit un deuxième flux détendu 206, qui est à nouveau détendu par passage dans une vanne V8 pour fournir un troisième flux détendu et refroidi 207.

L'ouverture de la vanne V8 est également régulée par le contrôleur de débit positionné sur la conduite 205.

Le troisième flux détendu et refroidi 207 est réchauffé et vaporisé dans l'échangeur E2 pour fournir un quatrième flux 208.

Le quatrième flux 208 circule dans un ballon d'aspiration B4 qui produit un cinquième flux 209. Ce dernier alimente un compresseur K3 à un étage à basse pression.

Le compresseur K3 est entraîné par un moteur, de préférence électrique, et fournit un sixième flux 210 comprimé, qui est collecté par un ballon d'aspiration B5. Le ballon d'aspiration B5 produit un septième flux 211 qui alimente un compresseur K4 à un étage à basse pression. Le compresseur K4 fournit un huitième flux comprimé 212 à un premier étage à moyenne pression. Le huitième flux 212 est refroidi par passage dans un réfrigérant E8 pour fournir un neuvième flux refroidi 213, qui est introduit à un deuxième étage à moyenne pression du compresseur K4.

Le compresseur K4 produit, à un étage à haute pression, un dixième flux 214 comprimé, qui est refroidi dans le réfrigérant E9 pour fournir le flux 201.

L'installation représentée sur la figure 1 comporte en outre un quatrième circuit qui correspond à un troisième cycle de réfrigération. Ce troisième cycle de réfrigération permet de refroidir l'échangeur thermique E3, et comporte un étage de pression de vaporisation.

Un troisième mélange réfrigérant 101 provenant d'un réfrigérant E7 est refroidi et totalement condensé par passage successif dans les échangeurs thermiques E1A, E1B, E1C, E2 et E3 pour fournir un premier flux refroidi et condensé 106.

Ce troisième mélange réfrigérant comprend majoritairement des hydrocarbures en C1 et de l'azote. De préférence, ce mélange comprend majoritairement un hydrocarbure en C1. Dans un mode de réalisation préféré, le mélange comprend, en moles, entres 10% et 30% d'azote, entre 60% et 90% de méthane et entre 0 et 20% d'éthane.

Ce premier flux refroidi et condensé 106 est détendu dans une turbine de détente X2 couplée à un générateur électrique. La vitesse de rotation de la turbine de détente X3 est régulée par un contrôleur de débit positionné sur la conduite 106. La turbine de détente X2 fournit un deuxième flux détendu 107, qui est à nouveau détendu par passage dans une vanne V7 pour fournir un troisième flux détendu et refroidi 108.

L'ouverture de la vanne V7 est également régulée par le contrôleur de débit positionné sur la conduite 106.

Le troisième flux détendu et refroidi 108 est réchauffé et vaporisé successivement dans les échangeurs E3 puis E2 pour fournir un quatrième flux 110.

Le quatrième flux 110 circule dans un ballon d'aspiration B2 qui produit un cinquième flux 111. Ce dernier alimente un compresseur K1 à un étage à basse pression.

Le compresseur K1 est entraîné par un moteur, de préférence électrique, et fournit un sixième flux 112 comprimé, qui est refroidi dans un réfrigérant E5 pour produire un septième flux 113. Le septième flux 113 est collecté par un ballon d'aspiration B3 qui produit un huitième flux 114 qui alimente un compresseur K2 à un étage à basse pression. Le compresseur K2 fournit un neuvième flux comprimé 115 à un premier étage à moyenne pression. Le neuvième flux comprimé 115 est refroidi par passage dans un réfrigérant E6 pour fournir un dixième flux refroidi 116, qui est introduit à un deuxième étage à moyenne pression du compresseur K2.

Le compresseur K2 produit, à un étage à haute pression, un onzième flux 117 comprimé, qui est refroidi dans le réfrigérant E7 pour fournir le flux 101.

En se rapportant à la figure 2, l'installation représentée est destinée à liquéfier et déazoter un gaz naturel 1 sous pression contenant du méthane, des hydrocarbures en C₂ et supérieurs et de l'azote, pour l'obtention, d'une part d'un gaz naturel liquéfié (GNL) essentiellement exempt d'azote 24, et d'autre part d'azote gazeux 29 essentiellement exempt d'hydrocarbures.

L'installation représentée comporte quatre circuits indépendants et fonctionne de façon semblable à l'installation représentée en figure 1, à l'exception du traitement de séparation de l'azote du gaz naturel, qui comporte une colonne de distillation supplémentaire.

Ainsi, comme cela est le cas pour l'installation représentée à la figure 1, un premier circuit correspond au traitement d'un gaz naturel 1 pour l'obtention d'une part de gaz naturel liquéfié 24, et d'autre part d'azote gazeux 29. Les trois autres circuits correspondent à des cycles réfrigérants utilisant des compresseurs K1-K6, nécessaires à la liquéfaction du gaz naturel 1.

Dans le premier circuit, le gaz naturel 1 est refroidi, détendu, et liquéfié pour fournir un flux de GNL détendu 8. Le flux de GNL détendu 8 est obtenu par refroidissement successif dans des échangeurs thermiques E1A, E1B, E1C, E2, puis E4. Du gaz naturel liquéfié 6 obtenu en sortie de l'échangeur E4 est détendu dans une turbine X1 couplée à un générateur électrique, pour fournir un flux 7 qui est ensuite détendu dans une vanne V1. L'ouverture de la vanne V1 est régulée par un contrôleur de débit sur la conduite 6. L'admission du flux 6 dans la turbine X1 est également régulée par ce même contrôleur de débit.

La vanne V1 produit en sortie le flux de GNL détendu 8.

Le flux de gaz naturel liquéfié détendu 8 est ensuite séparé en deux fractions dans une première colonne de fractionnement T1 qui comporte une pluralité d'étages. Cette dernière produit, sur un dernier étage 30, une première fraction de tête 9 relativement plus volatile enrichie en azote. Elle produit aussi une première fraction de pied 15 relativement moins volatile appauvrie en azote.

La première colonne de fractionnement T1 comporte un rebouilleur de fond de colonne 31 comprenant un plateau 32. Un flux 13 collecté sur le plateau 32 est réchauffé dans l'échangeur thermique E4 pour fournir un flux 14 qui est réintroduit dans la première colonne de fractionnement T1 en dessous du plateau 32.

La première fraction de tête 9 est séparée en des première et deuxième fractions de séparation 33 et 35. La première fraction de séparation 33 est refroidie et liquéfiée dans l'échangeur E3 pour fournir une première fraction de séparation refroidie 34. La deuxième fraction de séparation 35 circule dans une conduite 35 comportant une vanne V2, puis est mélangée à la première fraction de séparation refroidie 34 pour fournir un flux 10. L'ouverture de la vanne V2 est commandée par un contrôleur de température positionné sur la conduite 10. La première fraction refroidie et liquéfiée 10 est introduite dans un ballon B1 pour y être séparée en une deuxième fraction de tête 11 relativement plus volatile très enrichie en azote et en une deuxième fraction de pied 12 relativement moins volatile, relativement moins riche en azote.

La deuxième fraction de pied 12 est introduite au dernier étage 30 de ladite première colonne de fractionnement T1.

La deuxième fraction de tête 11 est refroidie dans l'échangeur E3 pour fournir une fraction condensée 18. La fraction condensée 18 circule dans une vanne de détente V3 qui produit un flux détendu, partiellement vaporisé et refroidi 19.

La première fraction de pied 15 est refroidie dans l'échangeur thermique E3 pour fournir un flux de GNL refroidi 16. Le flux 16 circule dans une vanne V4 qui produit un flux 17. Le flux 17 est introduit dans un premier étage 36 relativement moins froid d'une deuxième colonne de fractionnement T2.

Le flux 19 est introduit dans un deuxième étage 37 relativement plus froid de la deuxième colonne de fractionnement T2.

La deuxième colonne de fractionnement T2 produit en pied le gaz naturel liquéfié essentiellement exempt d'azote 24. La deuxième colonne de fractionnement T2 comporte un rebouilleur de fond de colonne 38 comprenant un plateau 39. Un flux 21 collecté sur le plateau 39 est réchauffé dans l'échangeur thermique E3 pour fournir un flux 22 qui est réintroduit dans la deuxième colonne de fractionnement T2 en dessous du plateau 39. La conduite transportant le flux 21, avant d'entrer dans l'échangeur E3, comporte une conduite de dérivation 40 munie d'une vanne V5. Cette conduite de dérivation est connectée à la conduite transportant le flux 22. L'ouverture de la vanne V5 est régulée par un contrôleur de température placé sur la deuxième colonne de fractionnement T2, au dessus du plateau 39.

La première colonne de fractionnement T1 comporte un contrôleur de niveau de liquide couplé à la vanne V4.

La deuxième colonne de fractionnement T2 produit en pied un flux 23 de GNL qui est pompé par une pompe P1 vers une conduite d'évacuation 41. La conduite d'évacuation 41 comporte une vanne de soutirage V6, et produit du GNL essentiellement exempt d'azote 24.

L'ouverture de la vanne de soutirage V6 est régulée par un contrôleur de niveau de liquide contenu dans le fond de la deuxième colonne de fractionnement T2

L'installation représentée sur la figure 2 comprend des second, troisième et quatrième circuits qui sont des circuits de réfrigération. Ces circuits correspondent en tout point respectivement aux second, troisième et quatrième circuits décrits sur la figure 1.

Afin de permettre une appréciation concrète des performances d'une installation fonctionnant selon un procédé conforme à l'invention, des exemple chiffrés sont maintenant présentés, aux fins d'illustration et non de limitation. Les pressions sont données en bar, et sont convertibles en hectoPascals (SI) par une multiplication par 1000. lorsque des mélanges sont présents, les compositions des flux de matière circulant dans l'installation sont données en % molaire (%mol).

Selon une modélisation de l'installation en fonctionnement du schéma 1, dans le premier circuit, le gaz naturel sec 1, à 36,5°C et 51,9 bar est introduit dans l'installation avec un débit de 36075 kmol/h. Le gaz naturel sec 1 a la composition suivante : 0,0425% d'hélium ; 3,9061% d'azote ; 87,7956% de méthane ; 5,3421% d'éthane ; 1,9656% de propane ; 0,3485% d'isobutane ; 0,5477% de *n*-butane ; 0,0368% d'isopentane ; 0,0147% de n-pentane ; et 0,0004% de n-hexane.

Le gaz naturel sec 1 est refroidi successivement à 12,5°C ; moins 13°C ; moins 38°C ; moins 105°C et moins 120°C dans les échangeurs thermiques E1A, E1B, E1C, E2, et E4 pour constituer un flux 6. Des flux 2, 3, 4, et 5 correspondent respectivement à chacun des états physiques intermédiaires du gaz naturel sec après passage successif dans chacun des échangeurs thermiques E1A, E1B, E1C, et E2.

Le flux 6, liquide, est détendu de 49,5 bars à 18,5 bars dans la turbine hydraulique X1 dont la puissance est de 1042 kW, pour donner le flux 7. Ce flux 7 est détendu de 18,5 à 16 bars dans la vanne V1 puis est introduit dans la première colonne de fractionnement T1 qui opère à une pression de 10 bars et produit en tête la première fraction de tête 9, à une température de moins 166,6°C, une pression de 10,1 bars et avec un débit de 9668 kmol/h. La première fraction de tête 9 contient 97,05% d'azote et 2,77% de méthane.

La première colonne de fractionnement T1 produit en pied la première fraction de pied 15, à une température de moins 123,3°C, une pression de 10,2 bars et avec un débit de 34903 kmol/h. La première fraction de pied 15 contient 0,74% d'azote et 90,72% de méthane.

La première colonne de fractionnement T1 est équipée du rebouilleur ou échangeur thermique E4, dont la puissance thermique est de 9517 kW. Le flux 13 est soutiré du plateau 32 à moins 124,7°C et 10,2 bars, avec un débit de 39659 kmol/h, et est introduit dans le rebouilleur E4. Ce dernier produit le flux 14 à une température de moins 123,3°C, qui est introduit en dessous du plateau 32 de la première colonne de fractionnement T1

La première fraction de pied 15 est refroidie dans l'échangeur thermique E3, pour produire le flux 16 à moins 161,6°C. Le flux 16, après détente à 5 bars dans la vanne V6, produit le flux de GNL essentiellement exempt d'azote 24, qui est expédié vers le stockage.

Le flux 24, produit à raison de 34903 kmol/h, a la composition suivante : 0,0000% d'hélium ; 0,7408% d'azote ; 90,7263% de méthane ; 5,5215% d'éthane ; 2,0316% de propane ; 0,3602% d'isobutane ; 0,5661% de n-butane ; 0,0380% d'isopentane ; 0,0152% de n-pentane ; et 0,0004% de n-hexane.

La première fraction de tête 9 est refroidie dans l'échangeur thermique E3 pour fournir la première fraction refroidie et liquéfiée 10, à moins 169,2°C. Cette dernière est séparée dans le ballon B1 en la deuxième fraction de tête 11 relativement plus volatile très enrichie en azote, et en la deuxième fraction de pied 12 relativement moins volatile, relativement moins riche en azote.

La deuxième fraction de tête 11, produite avec un débit de 1172 kmol/h à moins 169,3°C et 10,0 bars a la composition suivante : 1,3084% d'hélium ; 98,1921% d'azote ; 0,4995% de méthane ; 0,0000% d'autres hydrocarbures.

La deuxième fraction de pied 12, produite avec un débit de 8496 kmol/h à moins 169,3°C et 10,0 bars a la composition suivante : 0,0131% d'hélium ; 96,8965% d'azote ; 3,0904% de méthane ; 0,0000% d'autres hydrocarbures.

La deuxième fraction de tête 11 est réchauffée dans les échangeurs thermiques E3, E2, E1C, E1B, et E1A pour produire le flux d'azote gazeux 29, à 7,0°C et 9,8 bars. Des flux 25, 26, 27, et 28 correspondent respectivement à chacun des états physiques intermédiaires de la deuxième fraction de tête 11 après passage successif dans chacun des échangeurs thermiques E3, E2, E1C, et E1B.

La deuxième fraction de pied 12 est introduite au dernier étage 30 de la première colonne de fractionnement T1 pour y être traitée.

Dans le second circuit, qui correspond au premier cycle de réfrigération, le mélange réfrigérant comprend 45% d'éthane et 55% de propane. Le flux 300 provenant du ballon B9 à 41,5°C et 30,15 bars, est refroidi dans l'échangeur E11 jusqu'à 36,5°C et 29,65 bars pour former le flux 301, dont le débit est de 64000 kmol/h.

Le premier flux 301 est refroidi dans l'échangeur thermique E1A jusqu'à 12,5°C et 29,35 bars pour former le deuxième flux 302. Le deuxième flux 302 est partagé en le troisième flux 303, dont le débit est de 21000 kmol/h, et en le sixième flux 306, dont le débit est de 43000 kmol/h.

Le troisième flux 303 est détendu à 15,85 bars dans la vanne V11 pour former le quatrième flux 304. Ce dernier est vaporisé et réchauffé jusqu'à 31,1°C dans l'échangeur E1A pour produire le cinquième flux 305 à 15,65 bars.

Le sixième flux 306 est refroidi dans l'échangeur thermique E1B jusqu'à moins 13,0°C et 29,35 bars pour former le septième flux 307. Le septième flux 307 est partagé en le huitième flux 308, dont le débit est de 25800 kmol/h, et en le douzième flux 312, dont le débit est de 17200 kmol/h.

Le huitième flux 308 est détendu à 7,81 bars dans la vanne V10 pour former le neuvième flux 309. Ce dernier est vaporisé et réchauffé jusqu'à 7,39°C dans l'échangeur E1B pour produire le dixième flux 310 à 7,61 bars.

Le douzième flux 312 est refroidi dans l'échangeur thermique E1C jusqu'à moins 38,0°C et 28,55 bars pour former le treizième flux 313. Le treizième flux 313 est détendu à 3,83 bars dans la vanne V9 pour former le quatorzième flux 314. Ce dernier est vaporisé et réchauffé jusqu'à moins 19,0°C dans l'échangeur E1C pour produire le quinzième flux 315 à 3,63 bars.

Le quinzième flux 315 passe par le ballon d'aspiration B6 qui produit le seizième flux 316 qui entre par l'aspiration à basse pression du compresseur K5 à moins 19,20°C et 3,53 bars.

Le dixième flux 310 passe par le ballon d'aspiration B7 qui produit le onzième flux 311 qui entre par l'aspiration à moyenne pression du compresseur K5 à 7,20°C et 7,51 bars.

Le compresseur K5 produit 43000 kmol/h du dix-septième flux 317 à 49,5°C et 15,65 bars.

Le dix-septième flux 317 est mélangé au cinquième flux 305 pour produire 64000 kmol/h du dix huitième flux 318. Ce dernier passe par le ballon d'aspiration B8 qui produit le dix-neuvième flux 319 qui entre par l'aspiration à basse pression du compresseur K6 à 43,25°C et 15,55 bars.

Le compresseur K6 produit le vingtième flux 320 à 82,62°C et 30,66 bars. Le vingtième flux 320 est refroidi dans l'échangeur E10 avant d'être stocké dans le ballon B1 à 41,5°C et 30,16 bars.

Dans le troisième circuit, qui correspond au deuxième cycle de réfrigération, le deuxième mélange réfrigérant 201 comprend 26% de méthane, 69% d'éthane et 5% de propane. Le deuxième mélange réfrigérant 201 provenant du réfrigérant E9 à 36,5°C et 31,36 bars, dont le débit est de 34700 kmol/h, est refroidi successivement dans les échangeurs E1A, E1B, E1C, et E2 respectivement à 12,5°C ; moins 13°C ; moins 38°C ; et moins 105,0°C pour former le premier flux 205. Des flux 202, 203, et 204 correspondent respectivement à chacun des états physiques intermédiaires du deuxième mélange réfrigérant après passage successif dans chacun des échangeurs thermiques E1A, E1B et E1C.

Le premier flux refroidi et condensé 205 est détendu dans la turbine de détente X3. La turbine de détente X3 fournit le deuxième flux détendu 206 à une pression de 9,00 bars et une température de moins 105,3°C. Le deuxième flux 206 est à nouveau détendu par passage dans la vanne V8 pour fournir le troisième flux 207, détendu à 3,00 bars et refroidi à moins 115,6°C.

Le troisième flux détendu et refroidi 207 est réchauffé et vaporisé dans l'échangeur E2 pour fournir 34700 kmol/h du quatrième flux 208 à moins 40,1°C et 2,7 bars.

Le quatrième flux 208 circule dans le ballon d'aspiration B4 qui produit le cinquième flux 209. Ce dernier alimente un compresseur K3 à 2,60 bars et moins 40,3°C.

Le compresseur K3 fournit le sixième flux 210 à une température de 38,1°C et une pression de 10,58 bars, qui est collecté par le ballon d'aspiration B5. Ce dernier produit le sixième flux 211 qui alimente le compresseur K4 à 10,48 bars. Le compresseur K4 fournit le septième flux comprimé 212 à 74,0°C et 18,05 bars. Le septième flux 212 est refroidi par passage dans le réfrigérant E8 pour fournir le huitième flux refroidi 213 à 36,5°C et 17,75 bars. Celui-ci est introduit au deuxième étage à moyenne pression du compresseur K4.

Le compresseur K4 fournit, à un étage à haute pression, le neuvième flux 214 comprimé à 31,66 bars et 75,86°C, qui est refroidi à 36,5°C dans le réfrigérant E9 pour fournir le flux 201 précité.

Dans le quatrième circuit, qui correspond au troisième cycle de réfrigération, le troisième mélange réfrigérant 101 comprend 35% d'azote, 54% de méthane, et 11% d'éthane. Le troisième mélange réfrigérant 101 provenant du réfrigérant E7 à 36,5°C et 47,00 bars, dont le débit est de 22500 kmol/h, est refroidi successivement dans les échangeurs E1A, E1B, E1C, E2 et E3 respectivement à 12,5°C ; moins 13°C ; moins 38°C ; moins 105°C et moins 170,0°C pour former le premier flux 106. Des flux 102, 103, 104 et 105 correspondent respectivement à chacun des états physiques intermédiaires du troisième mélange réfrigérant après passage successif dans chacun des échangeurs thermiques E1A, E1B, E1C, et E2.

Le premier flux refroidi et condensé 106 est détendu dans la turbine de détente X2. La turbine de détente X2 fournit le deuxième flux détendu 107 à une pression de 5,00 bars et une température de moins 170,7°C. Le deuxième flux 107 est à nouveau détendu par passage dans la vanne V7 pour fournir le troisième flux 108, détendu à 2,50 bars et refroidi à moins 179,2°C.

Le troisième flux 108, détendu et refroidi, est réchauffé et vaporisé dans l'échangeur E3 pour fournir 22500 kmol/h du quatrième flux 109 à moins 107,4°C et 2,30 bars.

Le quatrième flux 109 est réchauffé dans l'échangeur E2 à moins 41,0°C puis circule dans le ballon d'aspiration B2 qui produit le cinquième flux 111. Ce dernier alimente le compresseur K1 à 2,00 bars et moins 41,1°C.

Le compresseur K1 fournit le sixième flux 112 à une température de 104,0°C et une pression de 10,95 bars, qui est refroidi à 36,5°C par le réfrigérant E5 pour fournir le septième flux 113. Celui-ci est collecté par le ballon d'aspiration B3. Ce dernier produit le huitième flux 114 qui alimente le compresseur K2 à 10,5 bars. Le compresseur K2 fournit le neuvième flux comprimé 115 à 104,0°C et 21,74 bars. Le neuvième flux 115 est refroidi par passage dans le réfrigérant E6 pour fournir le dixième flux refroidi 116 à 36,5°C et 21,44 bars. Celui-ci est introduit au deuxième étage à moyenne pression du compresseur K2.

Le compresseur K2 fournit, à son étage à haute pression, le onzième flux 117 comprimé à 47,30 bars et 47,3°C, qui est refroidi à 36,5°C dans le réfrigérant E7 pour fournir le flux 101 précité.

Selon une modélisation de l'installation en fonctionnement du schéma 2, dans le premier circuit, le gaz naturel sec 1, à 36,5°C et 51,9 bar est introduit dans l'installation avec un débit de 36075 kmol/h. Le gaz naturel sec 1 a la même composition que pour l'exemple de modélisation de l'installation en fonctionnement du schéma 1.

Le gaz naturel sec 1 est refroidi successivement à 12,5°C ; moins 13°C ; moins 38°C ; moins 98°C et moins 114°C dans les échangeurs thermiques E1A, E1B, E1C, E2, et E4 pour constituer un flux 6. Des flux 2, 3, 4, et 5 correspondent respectivement à chacun des états physiques intermédiaires du gaz naturel sec après passage successif dans chacun des échangeurs thermiques E1A, E1B, E1C, et E2.

Le flux 6, liquide, est détendu de 49,5 bars à 18,5 bars dans la turbine hydraulique X1 dont la puissance est de 1072 kW, pour donner le flux 7. Ce flux 7 est détendu de 18,5 à 16 bars dans la vanne V1 puis est introduit dans la première colonne de fractionnement T1 qui opère à une pression de 15 bars et produit en tête la première fraction de tête 9, à une température de moins 142,7°C, une pression de 15,1 bars et avec un débit de 7454 kmol/h. La première fraction de tête 9 contient 74,65% d'azote et 25,13% de méthane.

La première colonne de fractionnement T1 produit en pied la première fraction de pied 15, à une température de moins 114,3°C, une pression de 15,2 bars et avec un débit de 34993 kmol/h. La première fraction de pied 15 contient 1,16% d'azote et 90,32% de méthane.

La première colonne de fractionnement T1 est équipée du rebouilleur ou échangeur thermique E4, dont la puissance thermique est de 10472 kW. Le flux 13 est soutiré du plateau 32 à moins 115,9°C et 15,2 bars, avec un débit de 34993 kmol/h, et est introduit dans le rebouilleur E4. Ce dernier produit le flux 14 à une température de moins 114,3°C, qui est introduit en dessous du plateau 32 de la première colonne de fractionnement T1.

La première fraction de pied 15 est refroidie dans l'échangeur thermique E3, pour produire le flux 16 à moins 166,0°C. Le flux 16, après détente à 1,4 bar dans la vanne V4, produit le flux 17, qui est expédié sur le premier étage 36 relativement moins froid de la deuxième colonne de fractionnement T2.

Sur la deuxième colonne de fractionnement T2, le rebouilleur ou échangeur thermique E4 comporte le plateau 32 duquel est soutiré le flux 21 à moins 161,0°C et 1,2 bar, avec un débit de 36683 kmol/h. Le flux 21 circule dans l'échangeur thermique E3 pour produire le flux 22 à une température de moins 159,4°C, qui est introduit en dessous du plateau 32 de la première colonne de fractionnement T1. La puissance thermique échangée entre les flux 21 et 22 est de 5153 kW.

La deuxième colonne de fractionnement T2 produit en pied le flux 23 à moins 159,4°C et 1,2 bar. Le flux 23 est pompé par la pompe P1 qui produit le flux 41. Le flux 41 est soutiré via la vanne V6 pour produire le flux de GNL essentiellement exempt d'azote 24,
à 4,2 bars et moins 159,3°C.

Le flux 24, produit à raison de 34763 kmol/h, a la composition suivante : 0,0000% d'hélium ; 0,3427% d'azote ; 91,0899% de méthane ; 5,5437% d'éthane ; 2,0398% de propane ; 0,3617% d'isobutane ; 0,5684% de n-butane ; 0,0382% d'isopentane ; 0,0153% de n-pentane ; et 0,0004% de n-hexane.

La première fraction de tête 9 est refroidie dans l'échangeur thermique E3 pour fournir la première fraction refroidie et liquéfiée 10, à moins 157,7°C. Cette dernière est séparée dans le ballon B1 en la deuxième fraction de tête 11 relativement plus volatile très enrichie en azote, et en la deuxième fraction de pied 12 relativement moins volatile, relativement moins riche en azote.

La deuxième fraction de tête 11, produite avec un débit de 1082 kmol/h à moins 157,7°C et 15,0 bars a la composition suivante : 1,4172% d'hélium ; 92,5819% d'azote ; 6,0009% de méthane ; 0,0000% d'autres hydrocarbures.

La deuxième fraction de pied 12, produite avec un débit de 6372 kmol/h retourne vers la première colonne de fractionnement T1 au dernier étage 30 pour y être retraitée.

La deuxième fraction de tête 11 est refroidie dans l'échangeur E3 et fournit la fraction 18 à moins 178°C et 14,5 bars. Cette dernière est détendue dans la vanne V3 pour produire le flux 19 à 1,3 bar et moins 193,7°C. Le flux 19 est introduit dans le deuxième étage 37 relativement plus froid de la deuxième colonne de fractionnement T2.

La deuxième colonne de fractionnement T2 produit en tête le flux 20 à moins 193,4°C et 1,2 bar, avec un débit de 1312 kmol/h.

Le flux 20 est réchauffé dans les échangeurs thermiques E3, E2, E1C, E1B, et E1A pour produire le flux d'azote gazeux 29, à 30,0°C et 1,04 bar. Des flux 25, 26, 27, et 28 correspondent respectivement à chacun des états physiques intermédiaires du flux 20 après passage successif dans chacun des échangeurs thermiques E3, E2, E1C, et E1B.

Le flux d'azote gazeux 29 comprend 1,1687% d'hélium, 98,3313% d'azote, 0,5% de méthane et 0,0000% d'autres hydrocarbures.

Dans le second circuit, qui correspond au premier cycle de réfrigération, le mélange réfrigérant comprend 45% d'éthane et 55% de propane. Le flux 300 provenant du ballon B9 à 41,5°C et 30,15 bars, est refroidi dans l'échangeur E1 jusqu'à 36,5°C et 29,65 bars pour former le flux 301, dont le débit est de 64000 kmol/h.

Le premier flux 301 est refroidi dans l'échangeur thermique E1A jusqu'à 12,5°C et 29,35 bars pour former le deuxième flux 302. Le deuxième flux 302 est partagé en le troisième flux 303, dont le débit est de 21000 kmol/h, et en le sixième flux 306, dont le débit est de 43000 kmol/h.

Le troisième flux 303 est détendu à 15,85 bars dans la vanne V11 pour former le quatrième flux 304. Ce dernier est vaporisé et réchauffé jusqu'à 29,5°C dans l'échangeur E1A pour produire le cinquième flux 305 à 15,65 bars.

Le sixième flux 306 est refroidi dans l'échangeur thermique E1B jusqu'à moins 13,0°C et 29,35 bars pour former le septième flux 307. Le septième flux 307 est partagé en le huitième flux 308, dont le débit est de 25800 kmol/h, et en le douzième flux 312, dont le débit est de 17200 kmol/h.

Le huitième flux 308 est détendu à 7,81 bars dans la vanne V10 pour former le neuvième flux 309. Ce dernier est vaporisé et réchauffé jusqu'à 5,58°C dans l'échangeur E1B pour produire le dixième flux 310 à 7,61 bars.

Le douzième flux 312 est refroidi dans l'échangeur thermique E1C jusqu'à moins 38,0°C et 28,55 bars pour former le treizième flux 313. Le treizième flux 313 est détendu à 3,83 bars dans la vanne V9 pour former le quatorzième flux 314 à moins 40,8°C et 3,83 bars. Ce dernier est vaporisé et réchauffé jusqu'à moins 20,7°C dans l'échangeur E1C pour produire le quinzième flux 315 à 3,63 bars.

Le quinzième flux 315 passe par le ballon d'aspiration B6 qui produit le seizième flux 316 qui entre par l'aspiration à basse pression du compresseur K5 à moins 20,94°C et 3,53 bars.

Le dixième flux 310 passe par le ballon d'aspiration B7 qui produit le onzième flux 311 qui entre par l'aspiration à moyenne pression du compresseur K5 à 5,39°C et 7,51 bars.

Le compresseur K5 produit 43000 kmol/h du dix-septième flux 317 à 47,7°C et 15,65 bars.

Le dix-septième flux 317 est mélangé au cinquième flux 305 pour produire 64000 kmol/h du dix-huitième flux 318. Ce dernier passe par le ballon d'aspiration B8 qui produit le dix-neuvième flux 319 qui entre par l'aspiration à basse pression du compresseur K6 à 41,50°C et 15,55 bars.

Le compresseur K6 produit le vingtième flux 320 à 80,95°C et 30,66 bars. Le vingtième flux 320 est refroidi dans l'échangeur E10 avant d'être stocké dans le ballon B1 à 41,5°C et 30,16 bars.

Dans le troisième circuit, qui correspond au deuxième cycle de réfrigération, le deuxième mélange réfrigérant 201 comprend 25% de méthane, 70% d'éthane et 5% de propane. Le deuxième mélange réfrigérant 201 provenant du réfrigérant E9 à 36,5°C et 30,48 bars, dont le débit est de 34200 kmol/h, est refroidi successivement dans les échangeurs E1A, E1B, E1C, et E2 respectivement à 12,5°C ; moins 13°C ; moins 38°C ; et moins 98,0°C pour former le premier flux 205. Des flux 202, 203, et 204 correspondent respectivement à chacun des états physiques intermédiaires du deuxième mélange réfrigérant après passage successif dans chacun des échangeurs thermiques E1A, E1B et E1C.

Le premier flux refroidi et condensé 205 est détendu dans la turbine de détente X3. La turbine de détente X3 fournit le deuxième flux détendu 206 à une pression de 9,00 bars et une température de moins 98,3°C. Le deuxième flux 206 est à nouveau détendu par passage dans la vanne V8 pour fournir le troisième flux 207, détendu à 3,00 bars et refroidi à moins 111,1°C.

Le troisième flux détendu et refroidi 207 est réchauffé et vaporisé dans l'échangeur E2 pour fournir 34200 kmol/h du quatrième flux 208 à moins 40,5°C et 2,7 bars.

Le quatrième flux 208 circule dans le ballon d'aspiration B4 qui produit le cinquième flux 209. Ce dernier alimente un compresseur K3 à 2,60 bars et moins 40,7°C.

Le compresseur K3 fournit le sixième flux 210 à une température de 36,5°C et une pression de 10,41 bars, qui est collecté par le ballon d'aspiration B5. Ce dernier produit le sixième flux 211 qui alimente le compresseur K4 à 10,31 bars. Le compresseur K4 fournit le septième flux comprimé 212 à 74,0°C et 18,25 bars. Le septième flux 212 est refroidi par passage dans le réfrigérant E8 pour fournir le huitième flux refroidi 213 à 36,5°C et 17,95 bars. Celui-ci est introduit au deuxième étage à moyenne pression du compresseur K4.

Le compresseur K4 fournit, à un étage à haute pression, le neuvième flux 214 comprimé à 30,78 bars et 73,01°C, qui est refroidi à 36,5°C dans le réfrigérant E9 pour fournir le flux 201 précité.

Dans le quatrième circuit, qui correspond au troisième cycle de réfrigération, le troisième mélange réfrigérant 101 comprend 15% d'azote, 77% de méthane, et 8% d'éthane. Le troisième mélange réfrigérant 101 provenant du réfrigérant E7 à 36,5°C et 43,55 bars, dont le débit est de 20200 kmol/h, est refroidi successivement dans les échangeurs E1A, E1B, E1C, E2 et E3 respectivement à 12,5°C ; moins 13°C ; moins 38°C ; moins 98°C et moins 166,0°C pour former le premier flux 106. Des flux 102, 103, 104 et 105 correspondent respectivement à chacun des états physiques intermédiaires du troisième mélange réfrigérant après passage successif dans chacun des échangeurs thermiques E1A, E1B, E1C, et E2.

Le premier flux refroidi et condensé 106 est détendu dans la turbine de détente X2. La turbine de détente X2 fournit le deuxième flux détendu 107 à une pression de 4,00 bars et une température de moins 166,4°C. Le deuxième flux 107 est à nouveau détendu par passage dans la vanne V7 pour fournir le troisième flux 108, détendu à 2,60 bars et refroidi à moins 169,3°C.

Le troisième flux 108, détendu et refroidi, est réchauffé et vaporisé dans l'échangeur E3 pour fournir 20200 kmol/h du quatrième flux 109 à moins 100,6°C et 2,40 bars.

Le quatrième flux 109 est réchauffé dans l'échangeur E2 à moins 41,0°C, et constitue alors le flux 110. Le flux 110 circule ensuite dans le ballon d'aspiration B2 qui produit le cinquième flux 111. Ce dernier alimente le compresseur K1 à 2,10 bars et moins 41,1°C.

Le compresseur K1 fournit le sixième flux 112 à une température de 100,0°C et une pression de 11,51 bars, qui est refroidi à 36,5°C par le réfrigérant E5 pour fournir le septième flux 113. Celui-ci est collecté par le ballon d'aspiration B3. Ce dernier produit le huitième flux 114 qui alimente le compresseur K2 à 11,21 bars. Le compresseur K2 fournit le neuvième flux comprimé 115 à 100,0°C et 22,41 bars. Le neuvième flux 115 est refroidi par passage dans le réfrigérant E6 pour fournir le dixième flux refroidi 116 à 36,5°C et 22,11 bars. Celui-ci est introduit au deuxième étage à moyenne pression du compresseur K2.

Le compresseur K2 fournit, à son étage à haute pression, le onzième flux 117 comprimé à 43,85 bars et 99,8°C, qui est refroidi à 36,5°C dans le réfrigérant E7 pour fournir le flux 101 précité.

L'utilisation d'un procédé selon l'invention mettant en oeuvre une installation conforme à la représentation schématique donnée à la figure 2, c'est à dire en utilisant une deuxième colonne de fractionnement, permet une économie d'énergie de 12270 kW sur l'ensemble des dépenses énergétiques, soit 6,28%.

Les puissances des différents compresseurs sont les suivantes (données exprimées en kW):

| **Compresseur** | **Schéma 1** | **Schéma 2** |
|---|---|---|
| K1 | 32070 | 28600 |
| K2 | 32310 | 26100 |
| K3 | 33100 | 32100 |
| K4 | 33080 | 32140 |
| K5 | 32310 | 32010 |
| K6 | 32530 | 32180 |
| **Total** | **195400** | **183130** |

Les puissances des moteurs sont équilibrées et inférieures à 35000 kW.

L'invention présente donc un intérêt pour la limitation des dépenses énergétiques lors de la production de gaz purifiés. Ce but est atteint tout en permettant une grande sélectivité de séparation du méthane et des autres constituants du gaz naturel lors de la mise en oeuvre du procédé.

Selon le schéma 2, la consommation énergétique est de 183130 kW pour produire 620710 kg/h de GNL déazoté. La consommation spécifique est de 0,295 kW.h/kg de GNL déazoté, ce qui est comparable à celle des installations classiques qui produisent du gaz combustible à forte teneur en azote.

Ainsi, les résultats obtenus par l'invention procurent des avantages importants constitués par une simplification et une économie substantielles dans la réalisation et la technologie des équipements et des méthodes de leur mise en oeuvre ainsi que dans la qualité des produits obtenus par ces méthodes.

## Revendications

1. Procédé de liquéfaction et de déazotation d'un gaz naturel (1) sous pression contenant du méthane, des hydrocarbures en C₂ et supérieurs et de l'azote, pour l'obtention, d'une part d'un gaz naturel liquéfié essentiellement exempt d'azote (24), et d'autre part d'azote gazeux (29) essentiellement exempt d'hydrocarbures, comprenant une première étape (I) dans laquelle (Ia) on refroidit, on détend, et on liquéfie ledit gaz naturel (1) pour fournir un flux de gaz naturel liquéfié détendu (8), dans laquelle (Ib) on sépare ledit gaz naturel liquéfié détendu (8) dans une première colonne de fractionnement (T1) comportant une pluralité d'étages, en une première fraction de tête (9) relativement plus volatile enrichie en azote, collectée sur un dernier étage (30) de ladite première colonne de fractionnement (T1), et une première fraction de pied (15) relativement moins volatile appauvrie en azote, **caractérisé en ce qu'**il comprend une seconde étape (II) dans laquelle (IIa) la première fraction de tête (9) est refroidie et liquéfiée pour fournir une première fraction refroidie et liquéfiée (10), **en ce que**, dans cette seconde étape, (IIb) la première fraction refroidie et liquéfiée (10) est séparée en une deuxième fraction de tête (11) relativement plus volatile très enrichie en azote, et en une deuxième fraction de pied (12) relativement moins volatile, relativement moins riche en azote, **en ce que**, dans cette seconde étape (IIc) la deuxième fraction de pied (12) est introduite au dernier étage (30) de ladite première colonne de fractionnement (T1), **en ce que**, dans cette seconde étape (IId) la deuxième fraction de tête (11) est réchauffée pour fournir l'azote gazeux (29), et **en ce que**, dans cette seconde étape (IIe) la première fraction de pied (15) est refroidie pour fournir le gaz naturel liquéfié essentiellement exempt d'azote (24), la puissance thermique permettant à l'étape (IIa) de refroidir et de liquéfier la première fraction de tête (9) étant fournie par un troisième cycle de réfrigération.

2. Procédé selon la revendication 1, **caractérisé en ce que** le troisième cycle de réfrigération utilise un fluide réfrigérant, ledit fluide réfrigérant étant refroidi et/ou au moins partiellement condensé par un deuxième cycle de réfrigération.

3. Procédé selon la revendication 2, **caractérisé en ce que** le deuxième cycle de réfrigération utilise un fluide réfrigérant, ledit fluide réfrigérant du deuxième cycle de réfrigération étant refroidi et/ou au moins partiellement condensé par un premier cycle de réfrigération utilisant un autre fluide réfrigérant.

4. Procédé selon la revendication 3, **caractérisé en ce que** le fluide réfrigérant du premier cycle de réfrigération est soit un hydrocarbure en C3 pur, soit un mélange contenant majoritairement des hydrocarbures en C3.

5. Procédé selon la revendication 3 ou 4,
**caractérisé en ce que** le fluide réfrigérant du deuxième cycle de réfrigération est un mélange comprenant majoritairement des hydrocarbures en C2 et C1.

6. Procédé selon la revendication 5, **caractérisé en ce que** le fluide réfrigérant du deuxième cycle de réfrigération est un mélange comprenant majoritairement un hydrocarbure en C2.

7. Procédé selon l'une quelconque des revendications 2 à 6, **caractérisé en ce que** le fluide réfrigérant du troisième cycle de réfrigération est un mélange comprenant majoritairement des hydrocarbures en C1 et de l'azote.

8. Procédé selon la revendication 7, **caractérisé en ce que** le fluide réfrigérant du troisième cycle de réfrigération est un mélange comprenant majoritairement un hydrocarbure en C1.

9. Procédé selon l'une quelconque des revendications 2 à 8, **caractérisé en ce qu'**une pluralité de compresseurs (K1 à K6) sont utilisés pour comprimer le ou les fluides réfrigérants.

10. Procédé selon la revendication 9, **caractérisé en ce que** lesdits compresseurs (K1 à K6) fonctionnent à l'aide de moteurs électriques.

11. Procédé selon l'une quelconque des revendications 1 à 10, **caractérisé en ce qu'**il comprend une troisième étape (III) dans laquelle (IIIa) la première fraction de pied (15), avant d'être refroidie pour l'obtention du gaz naturel liquéfié essentiellement exempt d'azote (24), est refroidie, détendue et introduite dans un premier étage (36) relativement moins froid d'une deuxième colonne de fractionnement (T2), et **en ce que**, dans cette troisième étape (IIIb) la deuxième fraction de tête (11), avant d'être réchauffée pour fournir de l'azote gazeux (29), est refroidie, liquéfiée, détendue et introduite dans un deuxième étage (37) relativement plus froid de ladite deuxième colone de fractionnement (T2).

12. Gaz naturel liquéfié essentiellement exempt d'azote (24) obtenu par le procédé selon l'une quelconque des revendications précédentes.

13. Azote gazeux (29) essentiellement exempt d'hydrocarbures obtenu par le procédé selon l'une quelconque des revendications 1 à 11.

14. Installation de liquéfaction et de déazotation d'un gaz naturel (1) sous pression contenant du méthane, des hydrocarbures en C₂ et supérieurs et de l'azote, pour l'obtention, d'une part d'un gaz naturel liquéfié essentiellement exempt d'azote (24), et d'autre part d'azote gazeux (29) essentiellement exempt d'hydrocarbures, comprenant des moyens pour effectuer une première étape (I) dans laquelle (Ia) on refroidit, on détend, et on liquéfie ledit gaz naturel (1) pour fournir un flux de gaz naturel liquéfié détendu (8), dans laquelle (Ib) on sépare ledit gaz naturel liquéfié détendu (8) dans une première colonne de fractionnement (T1) comportant une pluralité d'étages, en une première fraction de tête (9) relativement plus volatile enrichie en azote, collectée sur un dernier étage (30) de ladite première colonne de fractionnement (T1), et une première fraction de pied (15) relativement moins volatile appauvrie en azote, **caractérisée en ce qu'**elle comprend des moyens pour effectuer une seconde étape (II) dans laquelle (IIa) la première fraction de tête (9) est refroidie et liquéfiée pour fournir une première fraction refroidie et liquéfiée (10), **en ce que**, dans cette seconde étape (IIb) la première fraction refroidie et liquéfiée (10) est séparée en une deuxième fraction de tête (11) relativement plus volatile très enrichie en azote, et en une deuxième fraction de pied (12) relativement moins volatile, relativement moins riche en azote, **en ce que**, dans cette seconde étape (IIc) la deuxième fraction de pied (12) est introduite au dernier étage (30) de ladite première colonne de fractionnement (T1), **en ce que**, dans cette seconde étape (IId) la deuxième fraction de tête (11) est réchauffée pour fournir l'azote gazeux (29), et **en ce que**, dans cette seconde étape (IIe) la première fraction de pied (15) est refroidie pour fournir le gaz naturel liquéfié essentiellement exempt d'azote (24), la puissance thermique permettant à l'étape (IIa) de refroidir et de liquéfier la première fraction de tête (9) étant fournie par un troisième cycle de réfrigération.

15. Installation de liquéfaction et de déazotation selon la revendication 14, **caractérisée en ce que** le troisième cycle de réfrigération utilise un fluide réfrigérant, ledit fluide réfrigérant étant refroidi et/ou au moins partiellement condensé par un deuxième cycle de réfrigération.

16. Installation de liquéfaction et de déazotation selon la revendication 15, **caractérisée en ce que** le deuxième cycle de réfrigération utilise un fluide réfrigérant, ledit fluide réfrigérant du deuxième cycle de réfrigération étant refroidi et/ou au moins partiellement condensé par un premier cycle de réfrigération utilisant un autre fluide réfrigérant.

17. Installation selon la revendication 16,
**caractérisée en ce que** le fluide réfrigérant du premier cycle de réfrigération est soit un hydrocarbure en C3 pur, soit un mélange contenant des hydrocarbures en C2 et C3.

18. Installation selon la revendication 16 ou 17, **caractérisée en ce que** le fluide réfrigérant du deuxième cycle de réfrigération est un mélange comprenant majoritairement des hydrocarbures en C2 et C1.

19. Installation selon la revendication 18,
**caractérisée en ce que** le fluide réfrigérant du deuxième cycle de réfrigération est un mélange comprenant majoritairement un hydrocarbure en C2.

20. Installation selon l'une quelconque des revendications 15 à 19, **caractérisée en ce que** le fluide réfrigérant du troisième cycle de réfrigération est un mélange comprenant majoritairement des hydrocarbures en C1 et de l'azote.

21. Installation selon la revendication 20,
**caractérisée en ce que** le fluide réfrigérant du troisième cycle de réfrigération est un mélange comprenant majoritairement un hydrocarbure en C1.

22. Installation de liquéfaction et de déazotation selon l'une quelconque des revendications 15 à 21, **caractérisée en ce qu'**une pluralité de compresseurs (K1 à K6) sont utilisés pour comprimer le ou les fluides réfrigérants.

23. Installation de liquéfaction et de déazotation selon la revendication 22, **caractérisée en ce que** lesdits compresseurs (K1 à K6) fonctionnent à l'aide de moteurs électriques.

24. Installation de liquéfaction et de déazotation selon l'une quelconque des revendications 14 à 23,
**caractérisée en ce qu'**elle comprend des moyens pour effectuer une troisième étape (III) dans laquelle (IIIa) la première fraction de pied (15), avant d'être refroidie pour l'obtention du gaz naturel liquéfié essentiellement exempt d'azote (24), est refroidie, détendue et introduite dans un premier étage (36) relativement moins froid d'une deuxième colonne de fractionnement (T2), et **en ce que**, dans cette troisième étape (IIIb) la deuxième fraction de tête (11), avant d'être réchauffée pour fournir de l'azote gazeux (29), est refroidie, détendue, liquéfiée et introduite dans un deuxième étage (37) relativement plus froid de ladite deuxième colonne de fractionnement (T2).
